# EUROPÄISCHE PATENTSCHRIFT

(11) **EP 1 353 412 B1**
(45) Veröffentlichungstag und Bekanntmachung des Hinweises auf die Patenterteilung: **13.05.2009**
(21) Anmeldenummer: 03005650.1
(22) Anmeldetag: 13.03.2003
(51) Int. Cl.: H01R 13/518, H01R 9/24

(54) **Modularer Steckverbinder**
Modular connector
Connecteur modulaire

(30) Priorität: 13.04.2002 DE 20205787 U
(43) Veröffentlichungstag der Anmeldung: 15.10.2003
(73) Patentinhaber: Harting Electric GmbH & Co. KG, 32339 Espelkamp (DE)
(72) Erfinder: Dück, Jacob, 32339 Espelkamp (DE); Kleine, Martin, 32479 Hille (DE); Nass, Andreas, 31606 Warmsen (DE); Schmieding, Dirk, 47152 Bad Essen (DE)

(56) Entgegenhaltungen:
- EP-A- 0 079 016
- EP-A- 0 323 771
- DE-A- 19 851 473
- DE-C- 3 303 624
- DE-C- 19 707 120

## Beschreibung

Die Erfindung betrifft einen modularen Steckverbinder, der aneinanderreihbare und auswechselbare Module aufweist, die in einem aus zwei Hälften bestehenden Halterahmen gehalten sind, wobei die Module zum Anschluss und der Weiterleitung elektrischer, optischer und/oder pneumatischer Signale ausgebildet sind.

Ein derartiger modularer Steckverbinder wird benötigt, um bei dezentral ausgelegten Maschinen- oder Anlagensteuerungen elektrische, elektronische, optoelektronische oder pneumatische Steuersignale unmittelbar an der anzusteuernden Einheit innerhalb eines Steckverbinders zu erzeugen, auszuwerten oder weiterzuleiten.

Aus der DE 197 07 120 C1 ist ein Halterahmen zur Halterung von Steckverbindermodulen bekannt, der aus zwei gelenkig miteinander verbundenen Hälften gebildet ist, wobei entsprechend angepasste Steckverbindermodule innerhalb des Halterahmens formschlüssig gehalten werden.

Weiterhin ist aus der DE 198 51 473, in einem Verfahren zur Kodierung mechanisch verbindbarer Teile, ein Modulsteckverbinder gezeigt, bei dem vorzugsweise innerhalb eines der Module Mittel für eine elektronische Kodierung vorgesehen sind, die elektronische Informationen über das Objekt enthält, mit dem der Modulsteckverbinder verbunden ist.

Weiterhin ist aus der EP 0 079 016 eine Steckverbindung mit einer schaltbaren Kontaktbrücke bekannt, wobei in einem Steckdoseneinsatz mittels der Kontaktbrücke zwei Kontaktelemente elektrisch miteinander verbunden sind, und die Verbindung beim Zusammenfügen mit einem Gegenstecker getrennt wird.

Nachteilig wirkt sich bei bisher gebräuchlichen Steckverbindungen aus, dass ein Steuersignal zentral aus einem eventuell weit entfernten Steuerschrank zu einer bestimmten Anlage oder Maschine zu übermitteln ist.
Der Erfindung liegt daher die Aufgabe zugrunde, dass bei einer dezentralen aufgebauten Anlagensteuerung mindestens ein als Gehäuse ausgebildetes Modul in einem modular aufgebauten Steckverbinder integriert ist, bei dem die für eine Steuerungseinheit oder Maschine erforderliche Steuersignale im Modul in unmittelbarer Nähe des Verbrauchers erzeugt werden.

Diese Aufgabe wird dadurch gelöst, dass für eine dezentrale Anlagensteuerung erforderliche Steuersignale in mindestens einem als Modul ausgebildeten Gehäuse (3) generiert werden, wobei in dem Gehäuse elektronische, elektrische, optische und/oder pneumatische Schalt- und Steuerungsmittel vorgesehen sind, die eingehende Signale unmittelbar erzeugen, verändern, auswerten und weiterleiten.

Die mit der Erfindung erzielten Vorteile bestehen insbesondere darin, dass bei der z. Z. erfolgreich propagierten dezentralen Versorgung von Steuerungsanlagen und Maschinen mit Signalgrößen, zumindest ein Teil dieser Signale in unmittelbarer Nähe des Entstehungsortes in Modulen aufbereitet werden, die in entsprechenden modularen Steckverbindern integriert sind.
Beim Zusammenfügen der beiden Steckverbinder werden ein oder mehrere Signale aus den jeweiligen Maschinen- oder Anlagenteilen vorhandenen elektrischen, elektronischen, elektromechanischen oder optoelektischen aber auch pneumatischer Schaltungen eines in einem modularen Steckverbinder eingereihten Moduls zugeleitet, verarbeitet und dem Gegenstecker zur Signalweitergabe übergeben.
Funktionsbausteine, die in einem Modul zur Aufgabenlösung beitragen, können sein: Schaltrelais, elektronische Bauelemente wie Dioden Transistoren, Spulen, Widerstände, Kondensatoren, optische und optoelektrische Komponenten, integrierte Schaltkreise sowie Kombinationen der genannten Elemente. Weiterhin können zur Verarbeitung analoge wie digitale Signale verwendet werden.

Zudem können mikrotechnologische Systeme auf Substraten, Folien oder 3D-MID Technologien in separaten Gehäusen oder in einem angepassten Modulgehäuse eingesetzt werden.
Somit können vorteilhafterweise einfache Funktionen zur Anlagen oder Maschinensteuerung ohne zentrale Schaltschränke oder zusätzlicher Schaltkästen in unmittelbarer Nähe der Signalanwendung realisiert werden - bei erheblich reduziertem Verdrahtungsaufwand.

Ein Ausführungsbeispiel der Erfindung ist in der Zeichnung dargestellt und wird im folgenden näher erläutert. Es zeigen:
- Fig.1: einen modularen Steckverbinder und Gegenstecker mit einem Modul,
- Fig.2: einen modularen Steckverbinder und Gegenstecker mit zwei gegenüber angeordneten Modulen,
- Fig.: 3 zwei nebeneinander angeordnete Module mit digitalen Schaltmitteln,
- Fig. 4: mehrere Module für eine pneumatische Steuerung, und
- Fig. 5: eine Auswahl von Blockschaltbildern, die als Schaltmittel in Modulen gemäß den Fig. 1 - 4 einsetzbar sind.

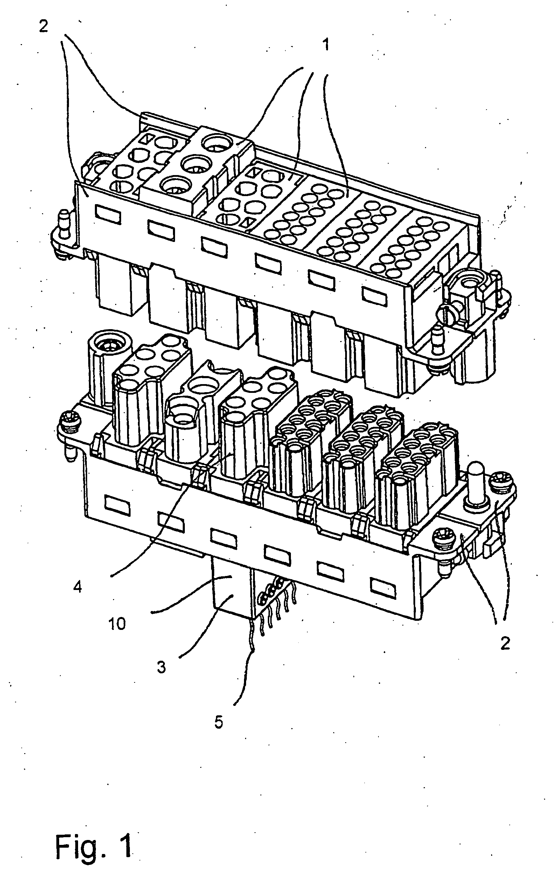

Die Fig.1 zeigt zwei gegeneinander weisende, modular aufgebaute Steckverbinder, deren unterschiedliche Module 1 in einem aus zwei Hälften bestehenden Rahmen 2 gehalten sind, wobei ein den Rahmen umgebendes Schutzgehäuse nicht gezeigt ist.
Die unterschiedlichen Module bieten die Möglichkeit, an unterschiedliche Übertragungssignale einen optimalen Modulstecker anzupassen. Etwa an unterschiedliche Stromstärken, an unterschiedlich zusammengefasste Einheiten oder unterschiedliche physikalische Signalgrößen, wie elektrische, optische oder pneumatische Signale.

Weiterhin ist in dem Rahmen ein Modul eingefügt, dass als Gehäuse 3 eine Steckseite 4 entsprechend einem Steckgesicht eines Moduls 1 enthält sowie eine Anschlussseite mit Stiften 5aufweist.
In dem Modul sind Schaltmittel 10 vorgesehen, die auf unterschiedliche Art eingehende Signale verändern, um diese an einen Gegenstecker und damit an einen potentiellen Verbraucher weiterleiten zu können.

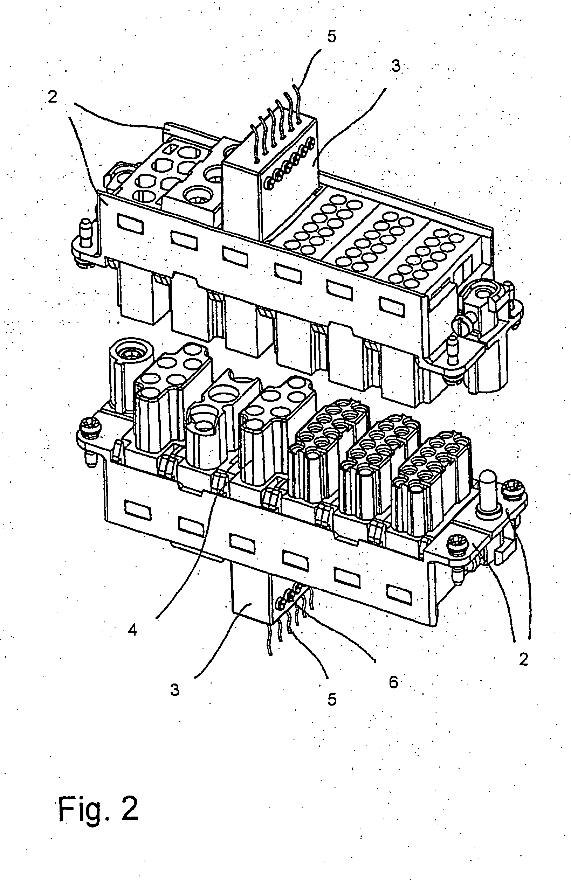

In Fig. 2 sind jeweils zwei gegenüber angeordnete Module 3 wie in Fig. 1 vorgesehen, die beide stiftförmige Anschlusselemente aufweisen. Dabei können die Stifte direkt mit den Schaltmitteln im Gehäuseinneren fest verbunden sein oder die Stifte werden mittels einer Schraubklemmverbindung 6 kontaktiert.

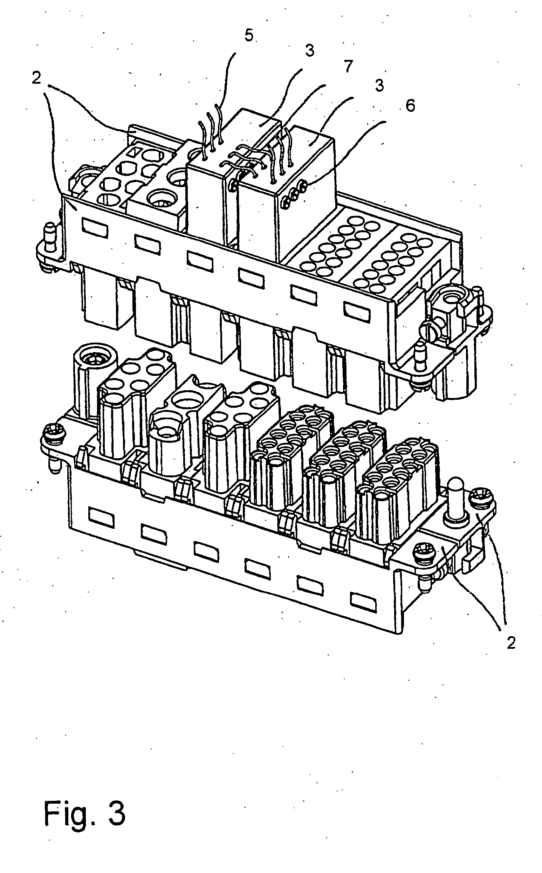

In der Fig. 3 ist eine Variante dargestellt, bei der zwei Module 3 unmittelbar nebeneinander angeordnet sind, wobei eine direkte elektrische Verbindung 7 vorgesehen ist. Ferner sind externe Anschlüsse 5 vorgesehen.

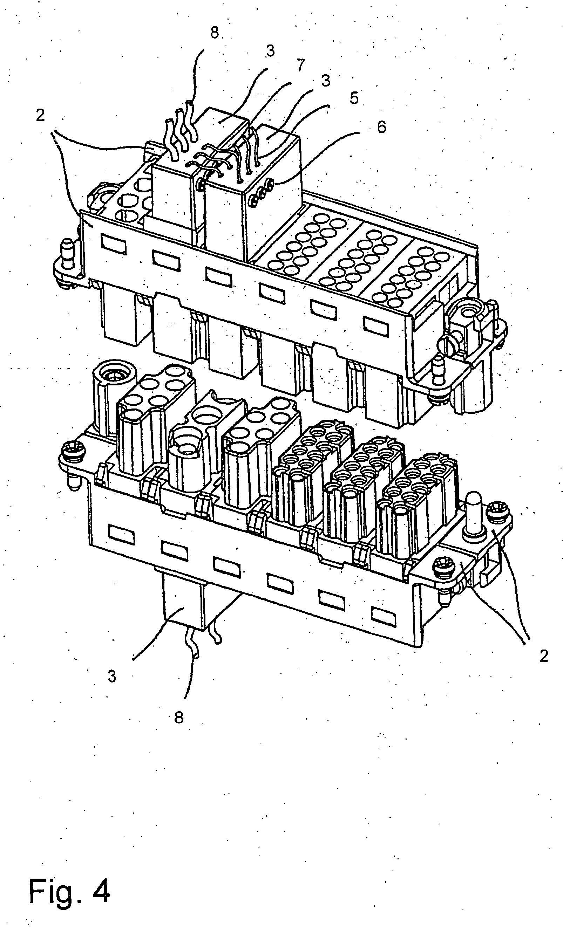

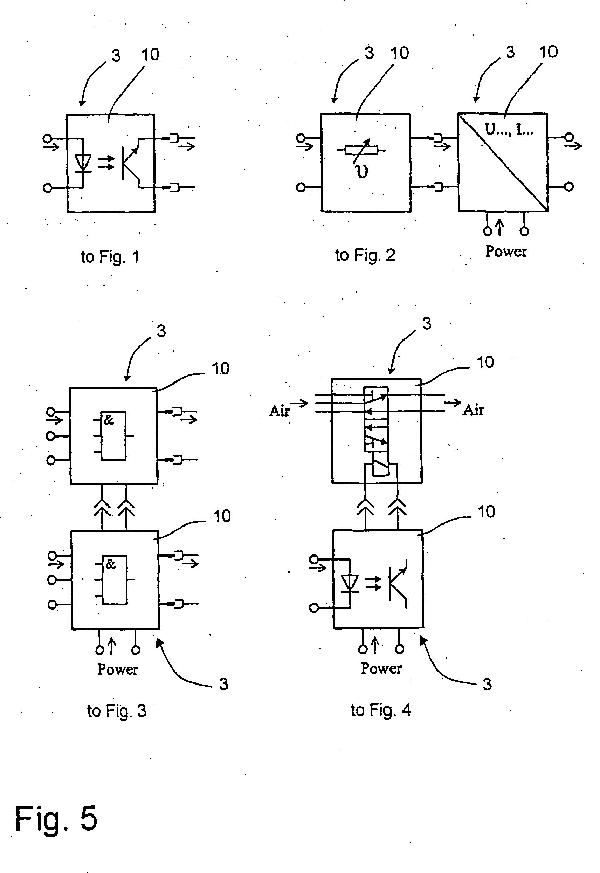

In der Fig. 4 ist eine Variante gezeigt, die wie in der Fig. 5 als Blockschaltbild dargestellt, die Module. 3 mit einer pneumatischen Steuerung enthält, wozu die pneumatischen Anschlüsse 8 zur Signalübermittlung vorgesehen sind.

In der Fig. 5 sind einige Blockschaltbilder aufgezeigt, die in einem der Modulgehäuse einsetzbar sind, wobei diese kleine Anzahl nur eine Auswahl der Varianten darstellen kann.
So können optoelektrische Bauteile, pneumatische Bauteile, digitale und analoge Bauteile als Schaltmittel 10 für eine signalregelnde oder signalsteuernde Funktion in einem Modul 3 enthalten sein.
Die an den einzelnen Blockschaltbilder angeführten Figurenangaben beziehen sich auf die bereits zuvor behandelten in den modularen Steckverbindern eingesetzten Module.

## Patentansprüche

1. Modularer Steckverbinder, der aneinanderreihbare und auswechselbare Module (1) aufweist, die in einem aus zwei Hälften bestehenden Halterahmen (2) eines Steckverbinders gehalten sind, wobei die Module zum Anschluss und der Weiterleitung elektrischer, optischer und/oder pneumatischer Signale ausgebildet sind, **dadurch gekennzeichnet, dass** für eine dezentrale Anlagensteuerung erforderliche Steuersignale in mindestens einem als Modul (1) ausgebildeten Gehäuse (3) erzeugbar sind, das eine Steck- und eine Anschlussseite (4, 5) für elektrische, optische und/oder pneumatische Anschlüsse aufweist, und dass in dem Gehäuse elektronische, elektrische, optische und/oder pneumatische Schaltmittel (10) vorgesehen sind, mittels denen eingehende Signale veränderbar sind.

2. Modularer Steckverbinder nach Anspruch 1, **dadurch gekennzeichnet, dass** die Schaltmittel (10) als elektrische, elektronische, elektromechanische, pneumatische, mikrosystemtechnische und optoelektronische Bauelemente oder Baugruppen ausgebildet sind.

3. Modularer Steckverbinder nach Anspruch 1 oder 2, **dadurch gekennzeichnet,**
**dass** die Module (1) ein Gehäuse (3) mit einer Anschlussseite (5) aufweisen, an der sie mit der Anschlussseite (5) weiterer Module (1) verbindbar sind.

## Claims

1. A modular plug connector having replaceable modules (1) which can be arranged next to each other in line and which are held in a holding frame (2) of a plug connector, which consists of two halves, the modules being configured for the connection and the transmission of electrical, optical and/or pneumatic signals, **characterized in that** control signals necessary for a decentralized installation control can be generated in at least one housing (3) which is configured as a module (1) and has a plug-in side and a connecting side (4, 5) for electrical, optical and/or pneumatic terminals, and **in that** electronic, electrical, optical and/or pneumatic switching means (10) are provided in the housing, by means of which incoming signals can be changed.

2. The modular plug connector according to claim 1, **characterized in that** the switching means (10) are configured as electrical, electronic, electromechanical, pneumatic, microsystem-technical and optoelectronic components or assemblies.

3. The modular plug connector according to claim 1 or claim 2, **characterized in that** the modules (1) include a housing (3) which has a connecting side (5) where they can be connected with the connecting side (5) of further modules (1).

## Revendications

1. Connecteur à fiche modulaire qui présente des modules (1) susceptibles d'être alignés les uns aux autres et interchangeables, qui sont maintenus dans un cadre de maintien (2) constitué par deux moitiés, les modules étant réalisés pour la connexion et la transmission de signaux électriques, optiques et/ou pneumatiques, **caractérisé en ce que** des signaux de commande nécessaires pour une commande d'installation décentralisée peuvent être engendrés dans au moins un boîtier (3) réalisé sous forme de module (1) qui présente des côtés enfichage et connexion (4, 5) pour des connexions électriques, optiques et/ou pneumatiques, et **en ce que** dans le boîtier sont prévus des moyens de commutation (10) électroniques, électriques, optiques et/ou pneumatiques au moyens desquels des signaux entrants peuvent être modifiés.

2. Connecteur à fiche modulaire selon la revendication 1, **caractérisé en ce que** les moyens de commutation (10) sont réalisés sous forme de composants ou d'ensembles électriques électroniques, électromécaniques, pneumatiques, réalisés selon la technique des microsystèmes et optoélectroniques.

3. Connecteur à fiche modulaire selon la revendication 1 ou 2, **caractérisé en ce que** les modules (1) présentent un boîtier (3) avec un côté connexion (5) au niveau duquel ils peuvent être reliés au côté connexion (5) d'autres modules (1).
